# EUROPEAN PATENT APPLICATION

(11) **EP 4 357 258 A1**
(43) Date of publication of application: **24.04.2024**
(21) Application number: 23195564.2
(22) Date of filing: 05.09.2023
(51) Int. Cl.: B65B 25/04, A23B 9/04, A23B 9/06, A23L 3/01, A23L 3/28, B65D 77/22, B65D 81/34, B65B 55/02, B65B 55/16, B65B 57/14, B65B 31/00, B65B 25/00

(54) **PACKAGING FOOD**

(30) Priority: 08.09.2022 GB 202213157
(71) Applicant: Barfoots of Botley Limited, Pagham Bognor Regis West Sussex PO21 3PX (GB)
(72) Inventor: WILLIAMS, Keston, Bognor Regis, PO21 3PX (GB)
(74) Representative: Forresters IP LLP

(57) **Abstract**

A method of packaging fresh food, comprising the steps of: inserting the fresh food in a package, which comprises an aperture and a one-way valve covering the aperture, sealing the package, pasteurising the fresh food by applying microwaves to the package, and cooling the package.

## Description

The present disclosure relates to the packaging of fresh food.

A crucial factor in fresh food packaging is the shelf life achieved, that is to say the time period for which the packaged food can be displayed, or otherwise stored, before the food is liable to deteriorate and is no longer within its "Sell By" or "Use By" date.

Fresh food is liable to deteriorate due to the activity of bacteria, which feed on the food. Therefore, a primary function of the packaging is to exclude bacteria from reaching the food. This function is ineffective, however, if the bacteria are enclosed with the food in the first place.

The object of the present invention is to provide a method of fresh food packaging in which enclosed bacteria are minimised.

The present invention arose in a bid to provide an improved packaging means for fresh sweet corn, in particular to such a packaging means that would meaningfully extend shelf life without detriment to the taste or texture of the sweet corn. However, it has application to other foods in particular fruit and vegetables, for example fresh fruit and vegetables which also have cut ends prone to bacterial infection and a generally regular external contour.

Representative features are set out in the following clauses, which stand alone or may be combined, in any combination, with one or more features disclosed in the text and/or drawings of the specification.

According to the present invention in a first aspect, there is provided a method of packaging fresh food, comprising the steps of: inserting the fresh food in a package, sealing the package, pasteurising the fresh food by applying microwaves to the package, and cooling the package, wherein the package comprises an aperture and a one-way valve covering the aperture.

The fresh food may be sweet corn on the cob. Preferably, the husk has been removed and at least the stem end of the cob has been cut through. Both ends of the cob may be cut through and the silks removed. The cob may be further cut, such as to provide cobettes, or otherwise.

Whilst not limited to sweet corn, the present packaging method uniquely and significantly improves the shelf life of sweet corn on the cob without detriment. Fresh sweet corn on the cob packaged with prior art methods will remain fresh for only a few days, whilst fresh sweet corn on the cob packaged in accordance with the present method will remain fresh for weeks or months with no detriment to taste or texture. Moreover, owing to the pasteurisation and the form of the package, heating of the food for consumption is extremely simple. All that is required is to place a package in a microwave for a short cooking cycle with the one-way valve facing upwards.

The one-way valve covering the aperture is configured to automatically open when an overpressure occurs within the package. The overpressure occurs by the exposure of the package to the microwaves, which creates steam. The opening of the one-way valve releases both oxygen and steam. When the application of microwaves is stopped, the steam production instantaneously stops. The one-way valve is configured to close immediately based on the reduction of internal overpressure and the lowering of the ambient temperatures, which develops a vacuum. The closure of the valve upon completion of pasteurisation is important to seal the interior of the package and the food from ambient air and contaminating substances.

Preferably, prior to sealing the package, a predetermined amount of liquid is added to the package. The liquid is preferably water.

The predetermined amount of liquid may be 5 to 15% by weight of the fresh food. Such an amount has been found to be particularly beneficial in maintaining the taste and texture of the packaged pasteurised food, particularly fresh sweet corn on the cob. The inclusion/amount of liquid may vary in dependence on the food to be packaged.

There is preferably provided a weighing step, prior to the pasteurisation step, in which the sealed package is weighed, wherein, if the sealed package is outside predetermined tolerable limits from a predetermined weight, the package is automatically rejected.

Owing to the inconsistent nature of fresh fruit and vegetables, it is beneficial to include the weighing step. By such a step, the appropriate pasteurisation can be more reliably achieved. Overweight items that may not be sufficiently pasteurised are ejected, for example.

The package is preferably formed from a package bag. The fresh food may be dropped into the package bag prior to sealing. A plurality of pre-formed package bags may be joined to one another for passing along a production line before being cut to be separated into individual packages. The bags may be presented with their opening upwards for ease of dropping the fresh food into the package bags.

The package may otherwise be formed from package film and a sealing film. The sealing film may comprise the aperture and one-way valve covering the aperture, and may be used to seal the package. The package film may be thicker than the sealing film. The package film is preferably thermally vacuum formed from a sheet to define a flexible container for receiving the fresh food. A plurality of the packages are preferably formed simultaneously from a single sheet. The package film may be considered to define a base layer of the package with the sealing film forming a top layer.

The fresh food may be dropped into the container with a mask provided above the container through which the fresh food must pass. The mask preferably extends around a perimeter of the container to at least partially cover a seal region of the package, so as to avoid contamination of the seal region by contact with the fresh food. When a plurality of the packages are formed from a single sheet, the mask may be appropriately formed with a plurality of openings appropriately aligned with the packages.

Preferably the microwaves are applied to the package in a microwave tunnel, which comprises an array of magnetrons. Preferably, a plurality of the magnetrons of the array are arranged along a transport direction of the package through the microwave tunnel, and a controller is provided, which switches the magnetons on and off in dependence on the position of packages within the microwave tunnel.

There may be provided an additional step of irradiating the fresh food with ultra-violet light for destruction of bacteria thereon prior to the insertion step. However, owing to the pasteurisation, this step may be omitted.

The insertion and sealing steps preferably take place in a "high-care" room.

Normally, the high-care environment will be provided in a room separated from one or more rooms in which other steps are carried out. Preferably the atmosphere of the high-care environment is chilled and pressurised above the pressure of surrounding rooms. Whilst the chilled air fed to the high-care room can be filtered for bacteria removal, this is not generally found necessary. However, it is desirable that the personnel working in the high-care room should wear clean, bacteria free clothing, that is clothing which is laundered in a high-care environment.

Usually, the method will include one or more or all of the following additional, preliminary food treatment steps:
- chilling;
- initial grading;
- cutting to length;
- removal of external leaf matter (the husk);
- spraying or washing with a disinfectant fluid;
- final grading.

According to another aspect of the invention there is provided a packaged fresh food, the food having been packed in accordance with the first aspect.

Further, preferred, features are presented in the dependent claims.

Non-limiting embodiments of the invention will now be discussed with reference to the following drawings:
Figure 1 is a diagrammatic plan view of a sweet corn packaging line in accordance with the invention;
Figure 2 is a schematic illustration showing the aperture in the package covered by an exemplary one-way valve.

As expressed, whilst not limited as such, the present invention is particularly suited to the packaging of fresh sweet corn on the cob, and the discussion below, without limitation, will exemplarily focus on sweet corn.

Sweet corn is a cereal in which the grains are carried on a substantial core or cob. The grains are enclosed in outer leaves or husks. Each grain has a fibre, known as a silk, extending out of the end of the husk. Preparation of sweet corn for cooking involves removal of the husk and removal of the silks. It is also advantageous to trim the cob to a convenient length.

It should be noted that corn cobs growing within their husks are only slightly susceptible to bacterial contamination, due to the protection provided by the husks. Even on removal of the husks, the corn grains are not particularly susceptible to contamination, since their surface cells remain intact. However, the cut ends of the cobs are particularly susceptible to bacterial, yeast and mould attack, causing spoilage of the product and keeping shelf life short.

By the packaging method of the invention, the shelf life of the sweet corn, in particular sweet corn with cut ends, is dramatically increased (from 6 days to over 50 days).

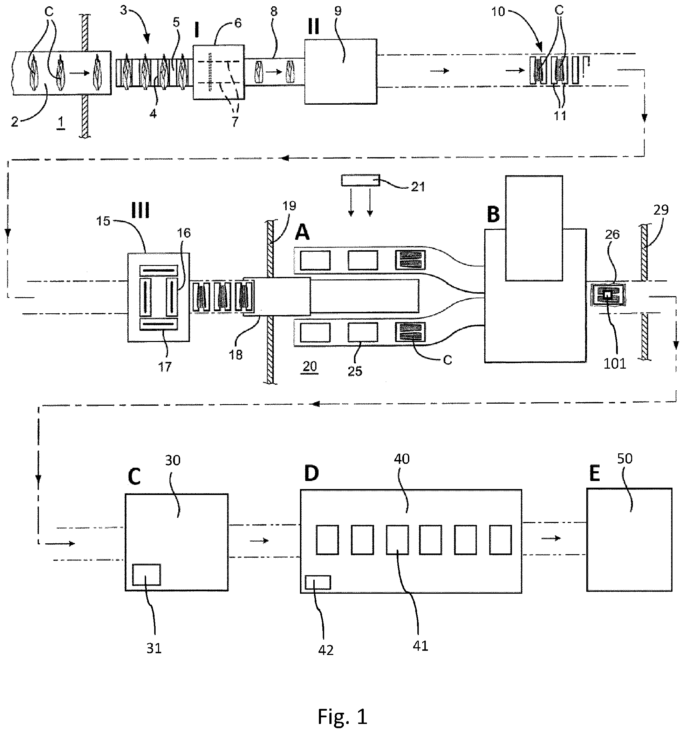

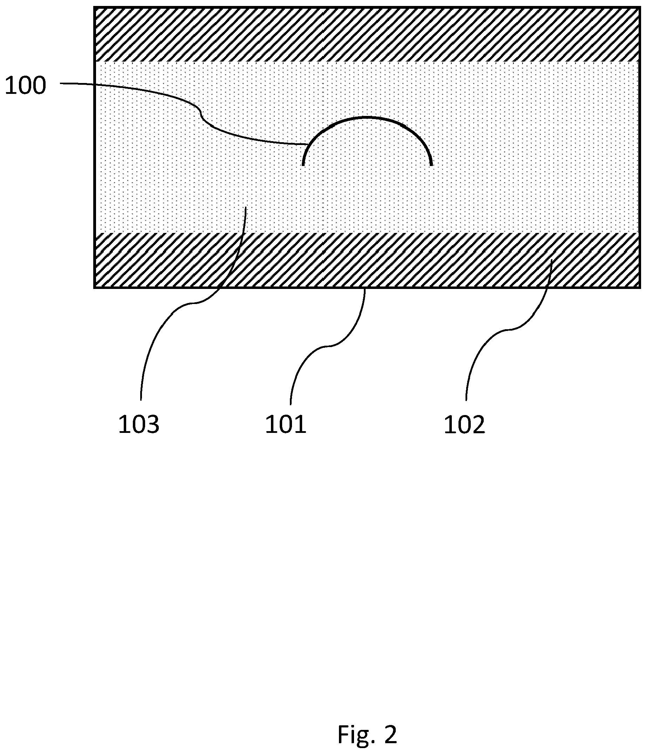

The present invention, in broadest terms, provides a method comprising the steps of: inserting the fresh food (sweet corn cob(s) C) in a package 25 (stage A of Figure 1), sealing the package (stage B of Figure 1), pasteurising the fresh food C by applying microwaves to the package 25 (Stage D of Figure 1), and cooling the package 25 (stage E of Figure 1), wherein the package 25 comprises an aperture 100 (Figure 2) and a one-way valve 101 covering the aperture 100,.

Figure 2 shows an exemplary one-way valve arrangement that may be implemented. A one-way valve 101 is shown covering the aperture 100 in the package 25. The valve 101 comprises a material layer, which is adhered to the package 25. The material layer is preferably a plastic film layer. It is preferably rectangular in form, although need not be limited as such. Considering the present, non-limiting, rectangular arrangement, which has two long sides and two short sides: a first adhesive 102 is applied along the long sides of the material layer and intermediate these adhesive-coated areas a second adhesive 103 is applied. Upon generation of an excess pressure inside the package 25, vapour tries to escape through the aperture 100 formed in the package 25. The aperture 100 may be arcuate, as shown, or may take other forms. By suitable choice of the adhesives 102, 103 to ensure that the adhesive 102 extending along the long sides possesses the stronger adhesive force, flow-through passages or channels form, leading up to the short sides of the material layer from the aperture 100 in the package 25, as the excess pressure inside the package 25 rises to a level above a minimum opening value. Once heating ceases, pressure equalisation occurs, and the valve 101 closes as a result of the resiliency of the material layer and the re-adhesion of the adhesive 103. The valve may also be configured with two material layers. In such case an intervening material layer may be introduced between a sealing film 26 or other package layer and the material layer of the present disclosed arrangement, which intervening layer also includes an aperture, which preferably overlaps with the opening 100.

Returning to Figure 1, with a focus stages A to E:
Prior to sealing the package, it is preferable that a predetermined amount of liquid is added to the package. The predetermined amount of liquid is preferably 5 to 15% by weight of the fresh food. The liquid is preferably water but need not be limited thereto, other liquids may be used. The liquid chosen may depend on the food being packaged. The liquid may, in some arrangements, comprise flavouring/seasoning. Any suitable device 21 for metering and adding the liquid to the packages at stage A may be used, as will be readily appreciated by those skilled in the art.

The packages 25 are preferably formed from a plastic film.

The form of the packages 25 may be varied, as will be readily appreciated by those skilled in the art. In the present arrangement, the packages 25 comprise a package film and a sealing film 26. As noted below, pre-formed bags may otherwise be used.

This package film may be thicker than the sealing film 26. A thicker film is beneficial for the packages 25 to maintain their form prior to the pasteurisation step. However, it is not essential, and the package film and the sealing film could, for example, have an equal thickness. The packages 25 may be vacuum formed in a conventional manner on the line. Preferably a plurality of the packages 25 will be simultaneously formed from a common sheet of plastic film.

The use of a plastic film for forming the packages 25 is preferred, since when the vacuum is created in the package 25, upon the microwave heating ceasing, the film of the package 25 (as well as the sealing film 26) shrinks around the packaged food. The packaged food is thereby vacuum/shrink packed. It should be appreciated, however, that the packages 25, may be otherwise formed. The packages 25 could, for example, comprise trays or otherwise. The chosen form of package 25 may be varied in dependence on the food to be packaged.

Notably, in a particular alternative, the packages may comprise package bags, which are pre-formed, and comprise the aperture is a surface thereof covered by the one-way valve. A plurality of package bags may be joined to one another, provided on a roll or otherwise, wherein the bags may be passed along the production line with open mouths upwards for the food to be dropped into, preferably automatically.

Regardless of the particular form of the packages, a layer/surface of the package in which the aperture (covered by the one-way valve) is provided, which is sealed against an opposed layer/surface of the package, preferably by heat-sealing, as discussed, may be considered to comprise a sealing film.

At stage A the fresh food is dropped into the container. This may be automated or manual. It is preferable, particularly in the case of a container being used, that a mask (not shown) is provided above the container through which the fresh food must pass. The mask will be configured to extend around a perimeter of each package 25 to at least partially cover a peripheral seal region of the package. The mask will comprise suitable openings, aligned with the packages 25 for the passage of the food. The mask, when present, will aid in avoiding contamination of the seal regions by limiting contact with the fresh food.

At stage B the packages 25 are sealed with a sealing film, which comprises the aperture 100 and covering one-way valve 101. Any suitable heat-sealing machine may be used, as will be readily appreciated by those skilled in the art.

Notably, in the case of package bags being used, at stage A food will be dropped into the package bags forming the containers, and at stage B the packages will be sealed, to seal closed the open package bags. Again, any suitable heat-sealing machine may be used, as will be readily appreciated by those skilled in the art.

In either case, as stated above, prior to sealing, it is preferable that a predetermined amount of liquid is added to the package.

At stage C an optional weighing step, prior to the pasteurisation step, may be performed. A suitable weighing device 30 is provided for such purpose. If any sealed package is determined to be outside predetermined tolerable limits from a predetermined weight, the package is automatically rejected. A reject bin 31 may be provided to receive the rejected food.

At stage D pasteurisation occurs. Pasteurisation takes place by exposing the packaged food to microwave energy. For such purpose a microwave tunnel 40 is preferably provided, through which the sealed packages travel. The microwave tunnel preferably comprises an array of magnetrons 41 extending along the length of the microwave tunnel, and thereby along a transport direction of the packages 25 through the tunnel. The number and arrangement of magnetrons 41 is not limited. There could, for example, be in excess of 100 magnetrons 41. The microwave tunnel 40 and the magnetrons 41 will be configured as appropriate, as will be readily appreciated by those skilled in the art. A controller 42 may be provided, which switches the magnetons 41 in the array on and off in dependence on the position of packages within the microwave tunnel 40. Such an arrangement is useful to save energy. In such an arrangement, magnetons 41 that are not irradiating a package 25 at a particular time will be shut off.

At stage E, following completion of pasteurisation and the automatic closing of the one-way valves 100, as discussed above, the packages will be chilled for storage. A suitable chiller 50 will be provided for such purposes. The chiller 50 is preferably a spiral chiller, although need not be limited as such.

Additional, optional processing steps, and additional preferable aspects of the method discussed, will now be considered with continued reference to Figure 1:
Notably, the sweet corn cobs have the reference C regardless of their state of processing. It should also be noted that whilst the depicted packaging line is shown as if set out in a straight line, in practice, the line is likely to include changes of direction to conserve space.

In addition to stages A to E discussed above, the line may have:
- a chiller/store room 1 for receiving harvested corn cobs;
- an elevator 2 for transporting the cobs from the chill room;
- a grading line 3 at which the cobs are graded with over and undersized ones being rejected. The accepted cobs may be arranged in channel, members 4, which may extend transversely of the travel of a conveyor 5, as shown;
- a saw trimmer 6, at stage I, having twin saw blades 7 for trimming the cobs to length, and optionally further blades configured for cutting the cobs to form cobettes, or otherwise;
- a transfer conveyor 8 to a de-husker 9, at stage II;
- a final grading conveyor 10. This may have a series of transverse rollers 11, as shown, which are arranged to rotate about their longitudinal axes which are transverse to the direction of the conveyor. The arrangement is such that the cobs are rotated as they are moved along by the conveyor. Defective cobs are preferably removed at this point;
- an ultra-violent irradiation unit 15 with UV sources 16 arranged within a housing at stage III. The cobs may pass through the UV unit 15 on the rollers 11 of the conveyor 10, whereby irradiation from above irradiates all of the grains on the cob(s) in the unit.
   UV irradiation is typically capable of reducing bacterial counts on irradiated material by as much as a log 2 reduction, that is from the order of 1,000 to the order of 10. In practice, this level of reduction will not be achieved because the initial count will not be so high as to permit such a high level of reduction. Thus the overall result is that on leaving the UV unit, the bacterial count on the corn on the cob is very low;
- a conveyor/elevator 18 through a wall 19 of a "high-care" room 20. The room may have a supply 21 of cool, positive pressure air. The opposed exit wall 29 is also indicated by way of example;

Thus in use of the complete depicted exemplary packaging line of Figure 1, the corn cobs are successively:
- Chilled in the store room 1, whence they transported on the conveyor 2;
- Trimmed to length in the trimmer 6, after initial grading at the line 3;
- De-husked in the de-husker 9; # Graded during their passage along the line 10;
- UV-radiation disinfected by the UV irradiation unit 15. The irradiation is preferably directed not only at the cut ends of the cob, which are particularly susceptible to bacterial infection, but also the corn grains themselves along the cob. Rotation of the cobs by the rollers of the conveyor 10 ensures that all the corns are exposed to the radiation although the latter is principally directed downwards (as wells inwards at the ends);
- Hygienically packed in the "high-care" room 20 into sealed packages comprising one-way valves, with a predetermined amount of liquid by weight of food added;
- Weighed to confirm a food weight within predetermined tolerable limits of a predetermined weight;
- Pasteurised using microwave radiation;
- Vacuum sealed by removal of microwave energy (by virtue of condensing of the steam trapped in the package and the one-way valve);
- Chilled

The invention is not intended to be restricted to the details of the above described embodiment. For instance the package shown contains two cobs. Packages may be provided with more or less cobs and/or with cobs cut down further, axially or radially.

Various steps, as indicated, may be omitted. In particular, the steps prior to Stage A should not be held to be limiting to the scope of the present invention.

The cobs could be sprayed at an upstream end of the conveyer 10. Such a spray could be arranged to remove the silks still adhering to the corn after process in the de-husker and for preliminary disinfection of the cobs.

Further, although the packaging line as described is dedicated to the packing of sweet corn, it could be adapted for the packing of other produce, particularly produce which requires trimming to length. However, the invention is not restricted to packaging of produce which is liable to infection at cut ends only.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

Although certain example embodiments of the invention have been described, the scope of the appended claims is not intended to be limited solely to these embodiments. The claims are to be construed literally, purposively, and/or to encompass equivalents.

## Claims

1. A method of packaging fresh sweet corn on the cob, comprising the steps of:
inserting the sweet corn on the cob in a package,
adding liquid to the package in an amount of 5 to 15% by weight of the sweet corn on the cob,
sealing the package,
pasteurising the sweet corn on the cob by applying microwaves to the package, and
cooling the package,
wherein the package comprises an aperture, and a one-way valve covering the aperture.

2. A method as claimed in Claim 1, wherein the one-way valve covering the aperture is configured to automatically open when an overpressure occurs by the generation of steam during exposure of the package to the microwaves, and to automatically close when the application of the microwaves is stopped, and the internal overpressure reduces to develop a vacuum.

3. A method as claimed in Claim 1 or 2, wherein the one-way valve comprises at least one layer of material fixed over the aperture in the film using adhesive.

4. A method as claimed in any preceding claim further comprising a weighing step, prior to the pasteurisation step, in which the sealed package is weighed, wherein, if the sealed package is outside predetermined tolerable limits from a predetermined weight, the package is automatically rejected.

5. A method as claimed in any preceding claim, wherein the package is formed from plastic film.

6. A method as claimed in any preceding claim, wherein the package is formed from a package bag or from a package film and a sealing film.

7. A method as claimed in any preceding claim, wherein the package is drawn in against the sweet corn on the cob by the vacuum so as to form a vacuum package.

8. A method as claimed in any preceding claim, wherein the microwaves are applied to the package in a microwave tunnel, which comprises an array of magnetrons.

9. A method as claimed in Claim 8, wherein a plurality of the magnetrons of the array are arranged along a transport direction of the package through the microwave tunnel and a controller is provided, which switches the magnetons on and off in dependence on the position of packages within the microwave tunnel.

10. A method as claimed in any preceding claim further including the step of irradiating the sweet corn on the cob with ultra-violet light for destruction of bacteria thereon prior to the insertion step.

11. A method as claimed in any preceding claim, wherein the insertion and sealing steps take place in a room having an atmosphere that is chilled and/or pressurised to a higher pressure than an adjacent room.

12. A method as claimed in Claim 11, wherein air fed to the room is filtered for bacterial removal.

13. A method as claimed in any preceding claim, wherein prior to inserting the sweet corn on the cob in the package, one or more or all of the following preliminary treatment steps is conducted:
• chilling;
• initial grading;
• cutting to length;
• removal of external leaf matter;
• spraying or washing with a disinfectant fluid;
• final grading.

14. A method as claimed in any preceding claim, wherein the package is cooled in a chiller.

15. A method as claimed in Claim 14, wherein the chiller comprises a spiral chiller.
